# EUROPÄISCHE PATENTANMELDUNG

(11) **EP 4 636 292 A1**
(43) Veröffentlichungstag der Anmeldung: **22.10.2025**
(21) Anmeldenummer: 24171037.5
(22) Anmeldetag: 18.04.2024
(51) Int. Cl.: F16L 3/10, F16L 3/23, F16L 3/24

(54) **ROHRHALTERUNG**

(71) Anmelder: Geberit International AG, 8645 Jona (CH)
(72) Erfinder: CARIGIET, Dario, 8712 Stäfa (CH)
(74) Vertreter: Frischknecht, Harry Ralph

(57) **Zusammenfassung**

Rohrhalterung (1) zur Festlegung eines Rohrs, umfassend
ein Supportelement (2) zur Lagerung der Rohrhalterung (1) auf einer Montageebene;
zwei mit dem Supportelement (2) verbindbare Stützen (3, 4), die in einem Abstand zueinander stehen, so dass zwischen den beiden Stützen ein Zwischenraum (5) für das Rohr geschaffen wird und
mindestens ein an den beiden Stützen (2) höhenverstellbar gelagertes Trägerelement (6) mit einer Trägerfläche (7), auf welcher ein Rohr lagerbar ist,
wobei die Stützen (3, 4) stabförmig ausgebildet sind und sich in Richtung einer Stützenachse (S3, S4) erstrecken,
wobei das Supportelement (2) zwei beabstandet zueinander liegende Lageröffnungen (8, 9) zur Lagerung der Stützen (3, 4) am Supportelement (2) aufweist, und
wobei die Lageröffnungen (8, 9) derart angeordnet und ausgebildet sind, dass die Stützen (3, 4) über eine Bewegung in Richtung der jeweiligen Stützenachse (S3, S4) in die Lageröffnungen (8, 9) einsetzbar sind.

## Beschreibung

### TECHNISCHES GEBIET

Die vorliegende Erfindung betrifft eine Rohrhalterung nach Anspruch 1 und eine Rohrhalterung nach Anspruch 2.

### STAND DER TECHNIK

Aus dem Stand der Technik sind Rohrhalterungen, insbesondere für einzubetonierende Rohrleitung, bekannt geworden. Beispielsweise offenbart die CH 700 182 eine derartige Rohrhalterung. Die Rohrhalterung zur Befestigung von Rohren an einer Schalung weist ein Grundelement auf, an welchem Stützen durch Befestigungsmittel, die an dem Grundelement und an den Stützen vorgesehen sind, montierbar sind. Hierfür weist die Grundplatte Längsführungen auf, welche so angeordnet sind, dass die Stützen quer zur Stützenachse in die Längsführung eingreift. Diese Anordnung hat sich nachteilig erwiesen. Bei der Montage von derartigen Rohrhalterungen auf einer Schalungsplatte sind meist Armierungseisen und andere Elemente, wie Rohrleitungen, Elektrorohre, bereits verlegt, was zu beengten Platzverhältnissen führt. Dies erschwert die Montage der Rohrhalterung gemäss der CH 700 182.

### DARSTELLUNG DER ERFINDUNG

Ausgehend von diesem Stand der Technik liegt der vorliegenden Erfindung eine Aufgabe zugrunde, eine Rohrhalterung anzugeben, welche die Nachteile des Standes der Technik überwindet. Insbesondere liegt der vorliegenden Erfindung eine Aufgabe zugrunde, eine Rohrhalterung anzugeben, welche einfacher montierbar ist.

Diese und andere Aufgaben löst die Rohrhalterung nach **Anspruch 1**. Demgemäss umfasst eine Rohrhalterung zur Festlegung eines Rohrs ein Supportelement zur Lagerung der Rohrhalterung auf einer Montageebene; zwei mit dem Supportelement verbindbare Stützen, die in einem Abstand zueinander stehen, so dass zwischen den beiden Stützen ein Zwischenraum für das Rohr geschaffen wird und mindestens ein an den beiden Stützen höhenverstellbar gelagertes Trägerelement mit einer Trägerfläche, auf welcher ein Rohr lagerbar ist. Die Stützen sind stabförmig ausgebildet sind und erstrecken sich in Richtung einer Stützenachse. Das Supportelement weist das Supportelement zwei beabstandet zueinander liegende Lageröffnungen zur Lagerung der Stützen am Supportelement auf. Die Lageröffnungen sind derart angeordnet und ausgebildet, dass die Stützen über eine Bewegung in Richtung der jeweiligen Stützenachse in die Lageröffnungen einsetzbar sind.

Durch die Anordnung und Ausbildung der Lageröffnungen, derart, dass die Stützen über eine Bewegung in Richtung der Stützenachse in die Lagerstellen einsetzbar sind, ergeht der Vorteil, dass bei der Montage zuerst das Supportelement auf der Montageebene befestigt werden kann und dass anschliessend die Stützen ohne Querbewegung, quer zur Stützenachse, mit dem Supportelement verbunden werden können. Somit können Montagehindernisse, wie Armierungseisen, einfach umgangen werden.

Ausgehend von diesem Stand der Technik liegt der vorliegenden Erfindung eine Aufgabe zugrunde, eine Rohrhalterung anzugeben, welche die Nachteile des Standes der Technik überwindet. Insbesondere liegt der vorliegenden Erfindung eine Aufgabe zugrunde, eine Rohrhalterung anzugeben, welche einfacher einsetzbar ist.

Diese und andere Aufgaben löst die Rohrhalterung nach **Anspruch 2**. Demgemäss umfasst eine Rohrhalterung ein Supportelement zur Befestigung auf einer Montageebene; zwei mit dem Supportelement verbindbare oder am Supportelement angeformte Stützen, die in einem Abstand zueinander stehen, so dass zwischen den beiden Stützen ein Zwischenraum für das Rohr geschaffen wird und mindestens ein an den beiden Stützen höhenverstellbar gelagertes Trägerelement mit einer Trägerfläche, auf welcher ein Rohr lagerbar ist. Die Stützen sind stabförmig ausgebildet sind und erstrecken sich in Richtung einer Stützenachse. Die Stützen weisen jeweils eine Vielzahl von in Richtung der jeweiligen Stützenachse verteilt angeordnete Rastöffnungen auf. Das Trägerelement weist pro Stütze einen Befestigungsabschnitt auf, welcher mindestens eine Federlasche mit einem Rastabschnitt für den Eingriff in eine der genannten Rastöffnungen aufweist. Die Federlasche ist so ausgebildet, dass bei Einwirken einer Betätigungskraft die Federlasche so bewegbar ist, dass der Rastabschnitt aus der Rastöffnung hinaus bewegbar ist, so dass das Trägerelement relativ zu den Stützen verschiebbar ist und wobei die Federlasche bei Wegfall der Betätigungskraft in den Eingriff mit einer der Rastöffnungen bringbar ist, so dass das Trägerelement relativ zu den Stützen festlegbar ist.

Somit kann mit einem Druck auf die Federlasche das Trägerelement von den Stützen entriegelt werden und dann in Richtung der Stützenachsen verschoben werden.

Vorzugsweise weist das Supportelement zwei beabstandet zueinander liegende Lageröffnungen zur Lagerung der Stützen am Supportelement auf. Die Lageröffnungen sind derart angeordnet und ausgebildet, dass die Stützen über eine Bewegung in Richtung der jeweiligen Stützenachse in die Lageröffnungen einsetzbar sind.

In der Folge werden nun weitere bevorzugte Merkmale für die oben genannten Ausführungsformen beschrieben.

Die Lageröffnungen sind von der Montageebene gesehen in Richtung einer Flächennormalen auf die Montageebene gesehen offen ausgebildet.

In der montierten Lage steht die Stützenachse rechtwinklig zur Montageebene.

Vorzugsweise sind die Stützen bezüglich bezüglich einer quer zur Mittelachse und mittig durch die Stütze verlaufenden Symmetrieebene im Wesentlichen symmetrisch ausgebildet. Somit kann die Stütze in verschiedenen Orientierungen in die Lageröffnungen eingesetzt werden.

Die Montagebene wird typischerweise durch die Oberseite eine Schalungsplatte bereitgestellt, welche in einem späteren Bauprozess mit Beton übergossen wird.

Das Supportelement, die beiden Stützen und das Trägerelement sind vorzugsweise als separate Bauteile ausgebildet. Die Stützen sind mit dem Supportelement verbindbar und das Trägerelement ist mit den Stützen verbindbar. Dies hat den Vorteil, dass eine Montage unter beengten Platzverhältnissen verbessert wird. Zudem kann das Packmass vor der Montage reduziert werden. Das heisst, es lässt sich Packvolumen und Packmaterial einsparen.

Vorzugsweise ist die Bewegung der Stütze in die Lageröffnung hinein, eine Längsbewegung in Richtung der Stützenachse ist.

Mit anderen Worten gesagt sind die Lageröffnungen derart ausgebildet, dass die Stützen ausschliesslich über eine Längsbewegung in Richtung der Stützenachse in die Lageröffnungen einsetzbar sind.

Unter einer Längsbewegung wird eine geradlinige Bewegung in Richtung, das heisst entlang, der jeweiligen Stützenachse verstanden. Die Längsbewegung hat keine Bewegungskomponenten quer zur jeweiligen Stützenachse.

Vorzugsweise weist das Supportelement eine Auflagefläche auf. Auf der Auflagefläche ist das Supportelement auf der Montageebene lagerbar. Ferner weist das Supportelement eine Frontfläche auf, die gegenüber der Auflagefläche liegt. Die Lageröffnungen erstrecken sich von der Frontfläche in das Supportelement hinein.

Mit anderen Worten gesagt sind die Lageröffnung so im Supportelement angeordnet, dass diese von der Seite der Frontfläche her zugänglich sind.

Vorzugsweise erstrecken sich die Lageröffnungen in Richtung einer Öffnungsachse, welche rechtwinklig zur Auflagefläche orientiert ist. Die Öffnungsachse ist während der Vorgang der Montage der jeweiligen Stütze in der jeweiligen Lageröffnung kollinear zur jeweiligen Stützenachse.

Vorzugsweise erstreckt sich von der Frontfläche eine Wandung von der Frontfläche weg, wobei sich die Wandung um die Lageröffnung herum erstreckt und deren Tiefe erhöht.

Vorzugsweise ist die Tiefe der Lageröffnung bzw. die Tiefe der Lageröffnung und die Höhe der Wandung wesentlich kleiner als die Länge der Stützen in Richtung der jeweiligen Stützenachse gesehen. Die Länge der Stützen ist vorzugsweise mindestens 5 mal länger oder mindestens 8 mal länger als die besagte Tiefe.

In einer Variante weisen die Lageröffnungen jeweils mindestens eine Klemmlasche auf, mit welcher die jeweilige Stütze in der jeweiligen Lageröffnung festlegbar ist. Weiter weist die Klemmlasche eine Rastnocke auf und die Stütze weist eine zur Rastnocke korrespondierende Rastausnehmung aufweist, in welche die Rastnocke eingreift.

In einer anderen Variante weisen die Stützen jeweils mindestens eine Klemmlasche auf, mit welcher die jeweilige Stütze in der jeweiligen Lageröffnung festlegbar ist. Die Klemmlasche weist vorzugsweise eine Rastnocke auf und die Stütze weist eine zur Rastnocke korrespondierende Rastausnehmung auf, in welche die Rastnocke eingreift.

Vorzugsweise weisen die Lageröffnungen jeweils eine Anschlagsfläche auf, auf welcher die jeweilige Stütze bezüglich einer Krafteinwirkung in Richtung der Stützenachse abgestützt ist. Die Anschlagsfläche ist vorzugsweise im Inneren der jeweiligen Lageröffnungen.

Die Lageröffnungen weisen Seitenwände auf, welche die jeweilige Stütze bezüglich einer Richtung quer zur Stützenachse in dem Bereich der Stütze, der in die Lageröffnung einragt, mindestens teilweise seitlich umgeben.

Die Anschlagsfläche definiert zudem die Einstecktiefe der Stütze in die jeweilige Lageröffnung. Vorzugsweise ist die Stütze mit einer Stirnfläche auf der Anschlagsfläche abgestützt.

Vorzugsweise bildet die Anschlagsfläche eine Bodenwand der Lageröffnung und schliesst die Lageröffnung unten ab. Vorzugsweise erstrecken sich die Seitenwände von der Bodenwand weg. Die oben genannte Tiefe erstreckt sich dabei bis zur Bodenwand.

Vorzugsweise weisen die Lageröffnungen Führungselemente auf, welche eine Führung für die Stütze quer zur Stützenachse bereitstellt. Besonders bevorzugt sind die Führungselemente Führungsrippen, welche von Seitenwänden der jeweiligen Lageröffnung in die jeweilige Lageröffnung einragen.

Vorzugsweise sind die Führungselemente, insbesondere die Führungsrippen, in Richtung der Stützenachsen, das heisst in Richtung der Bewegung der Stützen in die Lageröffnung hinein orientiert.

Vorzugsweise sind pro Befestigungsabschnitt zwei Federlaschen mit je mindestens einem Rastabschnitt vorhanden, wobei die Federlaschen derart angeordnet sind, dass bei einer Bewegung der Federlaschen aufeinander zu, die Rastabschnitte aus den Rastöffnungen hinaus bewegbar sind.

Die Anordnung von zwei Federlaschen weist den Vorteil auf, dass ein Installateur beide Federlaschen zusammendrücken kann und dann das Trägerelement von den Stützen entriegelt werden kann.

Vorzugsweise weist der Befestigungsabschnitt einen mit einer umlaufenden Seitenwand begrenzten Aufnahmeraum auf, durch welchen die Stütze hindurchragt und in welchem die Stütze in Richtung der Stützenachse bewegbar ist.

Vorzugsweise weist die Seitenwand eine Ausnehmung für die Federlasche auf. Die Federlasche ist an einer Befestigungsstelle an der Seitenwand angeformt und erstreckt sich von der Befestigungsstelle in der Ausnehmung bis zu einer der genannten Seitenwand gegenüberliegenden Seitenwand und endet dort mit einem freien Ende. Der Rastabschnitt ragt von der Seitenwand gegenüber dem freien Ende in den Aufnahmeraum ein.

Vorzugsweise weist die Stütze auf zwei einander gegenüberliegenden Seiten die genannten Rastöffnungen auf. Vorzugsweise weist die Federlasche eine von der Aussenseite der Federlasche abragende Betätigungsnocke auf.

Vorzugsweise liegt die Betätigungsnocke am freien Ende der Federlasche.

Vorzugsweise weist Supportelement Befestigungsöffnungen auf, durch welche ein Befestigungselement zur Befestigung des Supportelements auf der Montageebene hindurchführbar ist.

Vorzugsweise weist die Rohrhalterung mindestens ein Klemmelement auf, mit welchem ein Rohr zum Trägerelement klemmbar ist. In einer Variante ist das Klemmelement beispielsweise ein Kabelbinder, welcher durch entsprechende Öffnungen am Trägerelement hindurchgeführt ist. In einer anderen Variante ist das Klemmelement beispielsweise ein weiteres Trägerelement, welches oberhalb des Rohrs an den Stützen gelagert ist. Das Rohr wird dann zwischen dem Trägerelement und dem weiteren Trägerelement geklemmt.

Eine Anordnung umfasst mindestens eine Rohrhalterung nach obiger Beschreibung, eine Montageebene und ein Rohr, wobei die Rohrhalterung durch das Supportelement zur Montagebene befestigt ist, wobei die Stützenachsen rechtwinklig zur Montageebene orientiert sind.

Ein Verfahren zur Montage einer Rohrhalterung nach obiger Beschreibung ist dadurch charakterisiert,
dass in einem ersten Schritt das Supportelement auf einer Montageebene platziert wird,
dass in einem zweiten Schritt die Stützen in die Lageröffnung eingesetzt werden,
dass in einem dritten Schritt das Trägerelement mit den Stützen verbunden wird,
dass in einem vierten Schritt ein Rohr auf die Trägerfläche aufgelegt wird.

Die Schritte werden vorzugsweise in der nummerierten Reihenfolge ausgeführt. Es ist denkbar, den dritten Schritt vor dem zweiten Schritt auszuführen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsansicht einer Rohrhalterung nach einer besonders bevorzugten Ausführungsform;
- Fig. 2: eine perspektivische Ansicht einer Rohrhalterung nach Figur 1 gemäss einer Variante;
- Fig. 3: eine perspektivische Ansicht einer Rohrhalterung nach Figur 1 gemäss einer weiteren Variante;
- Fig. 4: eine Detailansicht der Verbindung einer Stütze mit einem Supportelement gemäss einer Rohrhalterung nach den vorhergehenden Figuren;
- Fig. 5: eine Schnittansicht durch die Stützenachse einer Stütze einer Rohrhalterung nach den vorhergehenden Figuren;
- Fig. 6: eine Detailansicht des Details VI der Figur 5;
- Fig. 7: eine Detailansicht des Details VII der Figur 5 im verrasteten Zustand; und
- Fig. 8: eine Detailansicht des Details VII der Figur 5 im freigegebenen Zustand.

### BESCHREIBUNG BEVORZUGTER AUSFÜHRUNGSFORMEN

In den Figuren wird eine besonders bevorzugte Ausführungsform einer Rohrhalterung 1 gezeigt. Die Rohrhalterung 1 dient der Lagerung eines Rohrs auf einer Montagebene. Die Montageebene wird typischerweise durch eine Schalungsstruktur bereitgestellt. Weiter liegen auf der Schalungsstruktur weitere Elemente, wie Armierungseisen. Die Schalungsstruktur wird in einem späteren Baufortschritt mit Beton übergossen, so dass das Rohr und die Rohrhalterung 1 in den Beton eingegossen werden. Pro Rohr werden typischerweise mehrere Rohrhalterungen 1 eingesetzt. Das Rohr ist vorzugsweise ein Wasserrohr, wie ein Abwasserrohr oder ein Frischwasserrohr. Das Rohr kann aber auch eine Elektrorohr sein.

Die Rohrhalterung 1 umfasst ein Supportelement 2, zwei Stützen 3, 4 und mindestens eines an den beiden Stützen 2 höhenverstellbar gelagertes Trägerelement 6 mit einer Trägerfläche 7, auf welcher ein Rohr lagerbar ist.

Das Supportelement 2 liegt im eingebauten Zustand auf der besagten Montageebene auf und ist typischerweise mit Befestigungsmitteln, wie Nägeln, Kabelbindern oder dergleichen, zur Montageebene gesichert. Das Supportelement 2 weist für die Auflage auf der Montageebene eine Auflagefläche 14 auf. Gegenüber der Auflagefläche 14 weist das Supportelement 2 eine Frontfläche 15 auf.

Die beiden Stützen 3, 4 stehen in einem Abstand zueinander. Der Abstand schafft dabei einen Zwischenraum 5 zwischen den beiden Stützen 3, 4, so dass das Rohr in den Zwischenraum eingelegt werden kann. Die Stützen 3, 4 sind stabförmig ausgebildet und erstrecken sich entlang einer Stützenachse S3, S4. Die Stützenachsen S3, S4 verlaufen parallel beabstandet zueinander. Die Stützen 3, 4 haben hier einen im Wesentlichen rechteckig ausgebildeten Querschnitt.

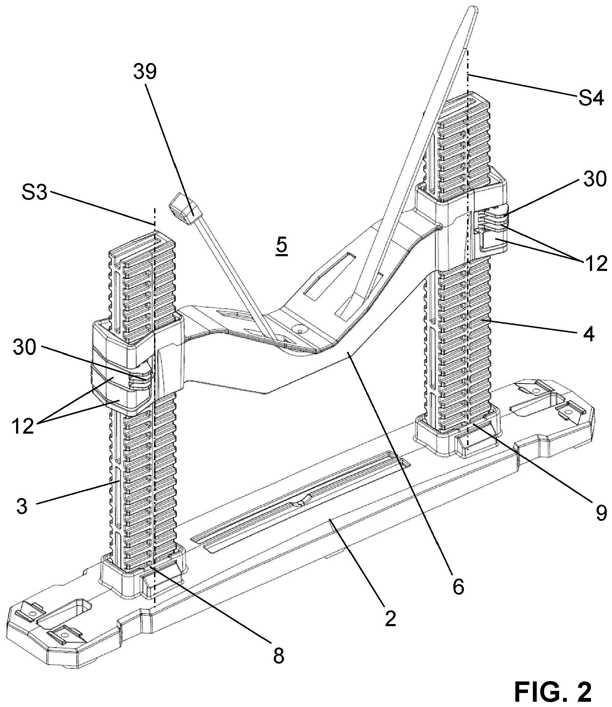

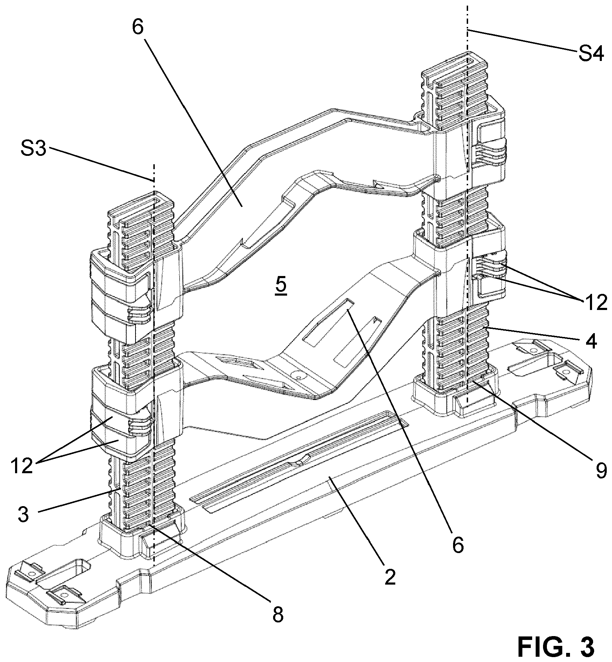

Bezüglich der Klemmung des Rohrs zeigt die Figur 2 die Anordnung eines Kabelbinders 34, mit welchem ein Rohr zum Trägerelement 6 geklemmt werden kann. In der Figur 3 ist ein weiteres Trägerelement 6 angeordnet, wobei das Rohr dann zwischen diesen beiden Trägerelementen 6 geklemmt ist.

Gemäss einem ersten Aspekt der gezeigten Ausführungsform bzw. der vorliegenden Erfindung sind die Stützen 3, 4 separat zum Supportelement 2 ausgebildet und lassen sich zum Supportelement 2 verbinden.

Das Supportelement 2 weist zwei beabstandet zueinander liegende Lageröffnungen 8, 9 zur Lagerung der Stützen 3, 4 am Supportelement 2 auf. Die Stützen 3, 4 können in die jeweilige Lageröffnungen 8, 9 eingesteckt werden. Die Lageröffnungen 8, 9 gemäss einem Aspekt der vorliegenden Erfindung derart angeordnet und ausgebildet, dass die Stützen 3, 4 über eine Bewegung in Richtung der jeweiligen Stützenachse S3, S4 in die Lageröffnungen 8, 9 einsetzbar sind. In Einbaulage stehen die Stützenachse S3, S4 rechtwinklig zur genannten Auflagefläche 14. Somit können die Stützen 3, 4 in eine Richtung rechtwinklig zur Auflagefläche 14 und demnach auch rechtwinklig zur Montagebene in die Lageröffnungen 8, 9 eingesetzt werden.

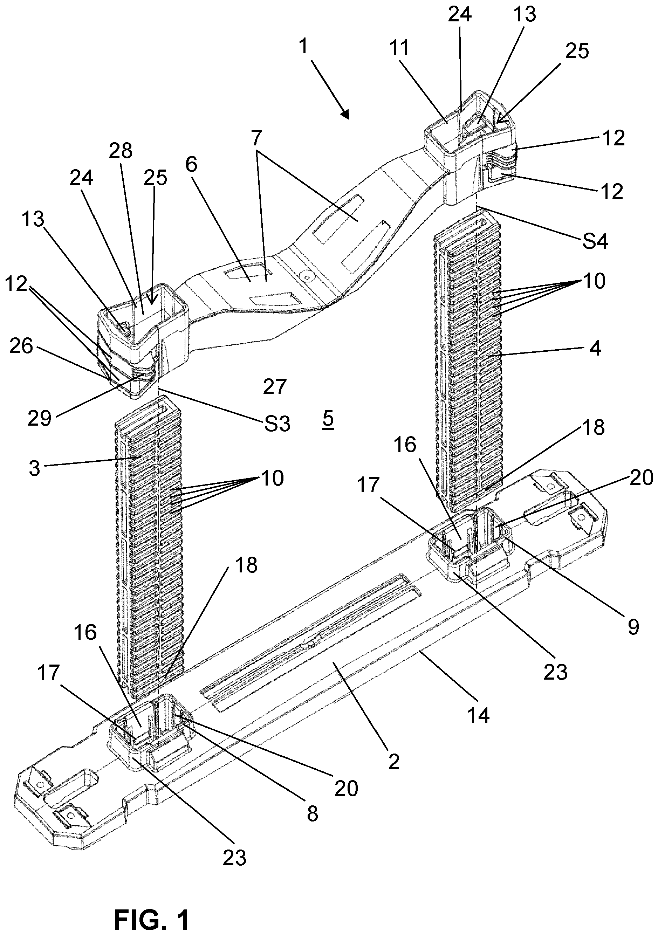

In der Figur 1 werden die Stützen 3, 4 vor der Montage gezeigt. Die Stützen 3, 4 können ausgehend von dieser Position entlang der Bewegung in Richtung der Stützenachse S3, S4 in die jeweilige Lageröffnung 8, 9 eingesetzt werden. Von der Figur 1 ist ersichtlich, dass das Supportelement 2 ohne die Stützen 3, 4 sehr flach ausgebildet ist. Demnach kann das Supportelement 2 sehr gut unter oder zwischen die oben genannten weiteren Elemente, wie die Armierungseisen, eingesetzt werden. Nach der einfachen Platzierung des Supportelements 2 können die Stützen 3, 4 in die jeweilige Lageröffnungen 8, 9 eingesetzt werden. Die Bewegung ist geradlinig in Richtung der Stützenachsen S3, S4, wodurch eine Querbewegung zur Montageebene entfällt. Auch hier ist das Einsetzen der Stützen sehr einfach und der Installateur kann die Stützen 3, 4 gut zwischen die weiteren Elemente einsetzen.

Die Figuren 2 und 3 zeigen die eingesetzten Stützen 3, 4. Das Trägerelement 6 kann entweder vor der Montage der Stützen 3, 4 am Supportelement 2 mit den Stützen 3, 4 verbunden werden, oder es kann nach der Montage der Stützen 3, 4 am Supportelement 2 mit den Stützen 3, 4 verbunden werden.

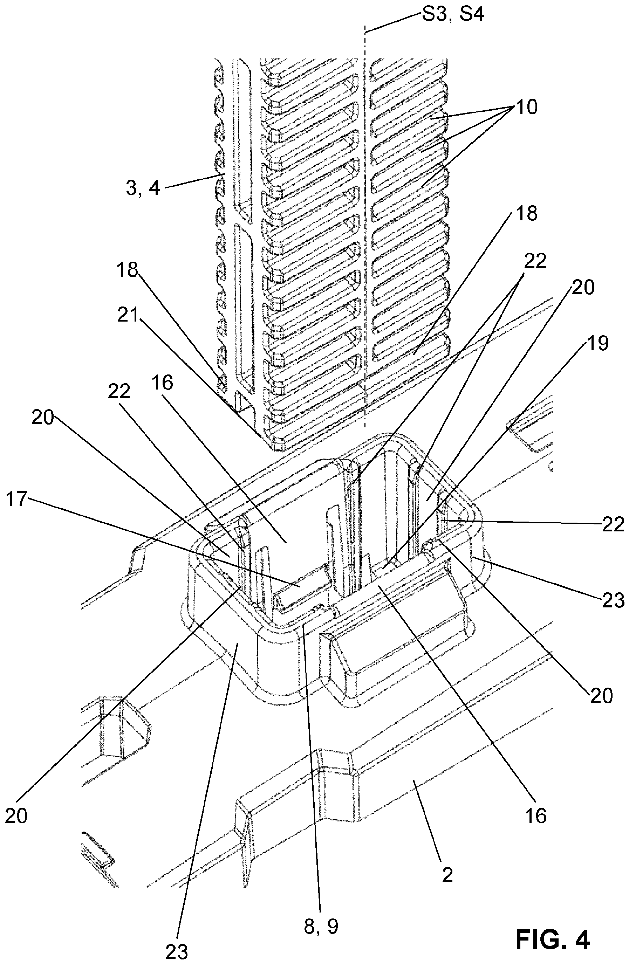

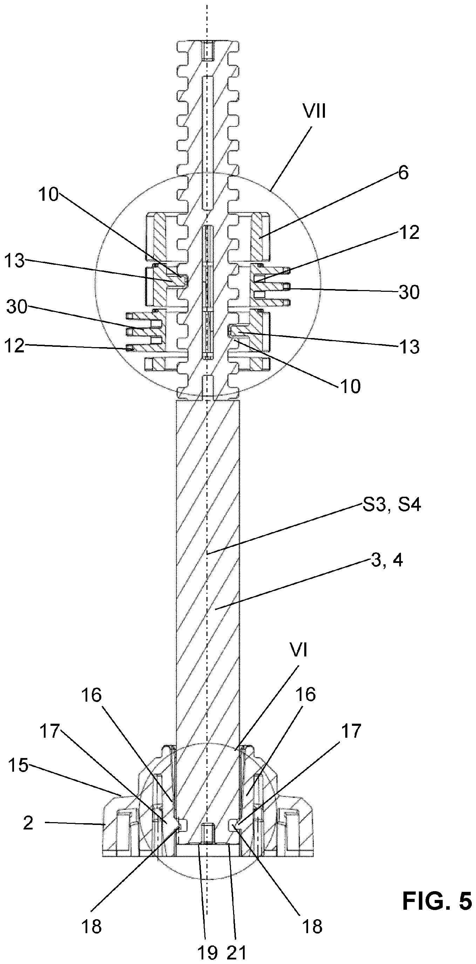

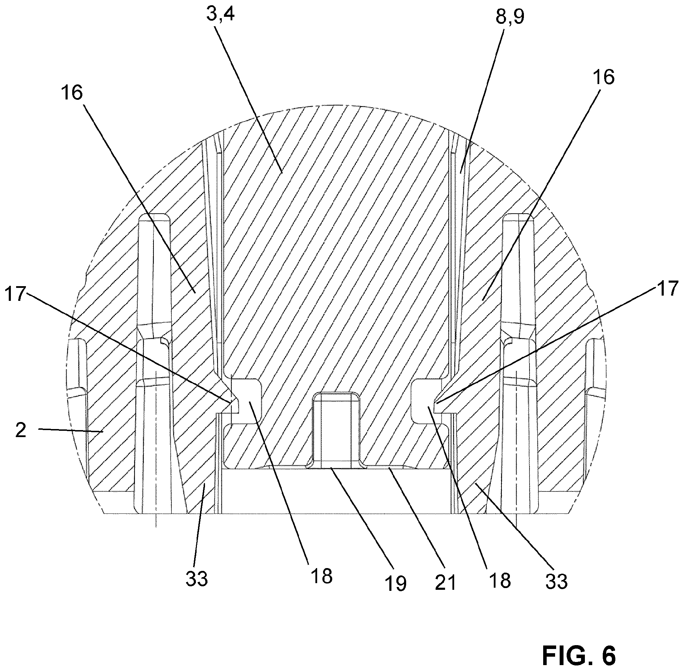

Anhand der Figuren 4, 5 und 6 werden optionale Merkmale der Lageröffnungen 8, 9 genauer erläutert. Die Figur 6 zeigt das Detail VI der Schnittdarstellung der Figur 5.

Die beiden Lageröffnungen 8, 9 erstrecken sich von der Frontfläche 15 in das Supportelement 2 hinein.

Jede der Lageröffnungen 8, 9 weist mindestens eine Klemmlasche 16 auf. In der gezeigten Ausführungsform sind jeweils zwei Klemmlaschen 16 an zwei bezüglich des Innenraums der Lageröffnung 8, 9 gegenüberliegenden Seiten angeordnet. Mit der mindestens einen Klemmlasche 16 ist die jeweilige Stütze 3, 4 in der jeweiligen Lageröffnung 8, 9 zum Supportelement 2 festlegbar. Die Klemmlasche 16 weist hier eine Rastnocke 17 auf. Die Stütze 3, 4 weist eine zur Rastnocke korrespondierende Rastausnehmung 18 auf. Im eingesetzten Zustand greift die Rastnocke 17 in die Rastausnehmung 18 ein.

Die Klemmlasche 16 ist im Inneren der Lageröffnung 8, 9 am Supportelement angeformt und erstreckt sich von der Anformstelle 32 in die Lageröffnung 8, 9 hinein. Das freie Ende 33 der Klemmlasche liegt tiefer in der Lageröffnung 8, 9 als die Anformstelle 32. Die Rastnocke 17 liegt dabei näher zum freien Ende 33 als zur Anformstelle 32. Die Rastausnehmung 18 erstreckt sich in der gezeigten Ausführungsform über die gesamte Breite der jeweiligen Seitenfläche der Stütze 3, 4.

Weiter weisen die Lageröffnungen 8, 9 jeweils eine Anschlagsfläche 19 auf. Die Anschlagsfläche 19 bildet den Grund der Lageröffnung 8, 9 und begrenzt diese nach unten hin. Die Anschlagsfläche 19 erstreckt sich teilweise oder ganz über den Querschnitt der jeweiligen Lageröffnung 8, 9. Auf der Anschlagsfläche 19 ist die jeweilige Stütze 3, 4 bezüglich einer Krafteinwirkung in Richtung der Stützenachse S3, S4 abgestützt. Die beiden Stützen 3, 4 stehen dabei mit ihrer Stirnfläche 21 auf der Anschlagsfläche 19 auf.

Weiter weisen die Lageröffnungen 8, 9 Seitenwände 20 auf, welche die jeweilige Stütze 3, 4 bezüglich einer Richtung quer zur Stützenachse S3, S4 in dem Bereich der Stütze 3, 4, der in die Lageröffnung 8, 9 einragt, mindestens teilweise seitlich umgeben. Die besagte Klemmlasche 16 steht vorzugsweise von einer Seitenwand 20 ab bzw. bildet eine Seitenwand 20.

Von der Figur 4 ist ersichtlich, dass die Lageröffnungen 8, 9 Führungselemente 22 aufweist, welche eine Führung für die Stütze 3, 4 quer zur Stützenachse S3, S4 bereitstellt. Die Führungselement sind vorzugsweise so ausgebildet, dass eine Führung der Stützen 3, 4 beim Einsetzen und im eingesetzten Zustand bereitgestellt wird. Die Führungselement 22 sind vorzugsweise Führungsrippen, welche von Seitenwänden 20 der jeweiligen Lageröffnung 8, 9 in die in die jeweilige Lageröffnung 8, 9 einragen. Vorzugsweise weist jede der Seitenwände 20 mindestens eine, insbesondere mindestens zwei, Führungselemente 22 auf.

Vorzugsweise erstreckt sich von der Frontfläche 15 eine Wandung 23 von der Frontfläche 15 weg. Die Wandung 23 erstreckt sich um die Lageröffnung 8, 9 herum und erhöht deren Tiefe.

Die Tiefe der Lageröffnung 8, 9 von der Frontfläche 15 bis zur Anschlagsfläche 19 oder von der Frontkante der Wandung 23 bis zur Anschlagsfläche 19 ist ein Vielfachs kleiner als die Länge der jeweiligen Stütze 3, 4 in Richtung der jeweiligen Mittelachse S3, S4 gesehen. Vorzugsweise ist die Stütze um mindestens einen Faktor 5 oder einen Faktor 8 länger als die Tiefe.

Ein zweiter Aspekt der gezeigten Ausführungsform bzw. der vorliegenden Erfindung richtet sich auf die Lagerung des Trägerelements 6 an den Stützen 3, 4. Die Stützen 3, 4 weisen jeweils eine Vielzahl von in Richtung der jeweiligen Stützenachse S3, S4 verteilt angeordnete Rastöffnungen 10 auf. Die Stützen 3, 4 können dabei wie oben beschrieben mit dem Supportelement 2 verbunden werden oder sie können am Supportelement 2 angeformt sein.

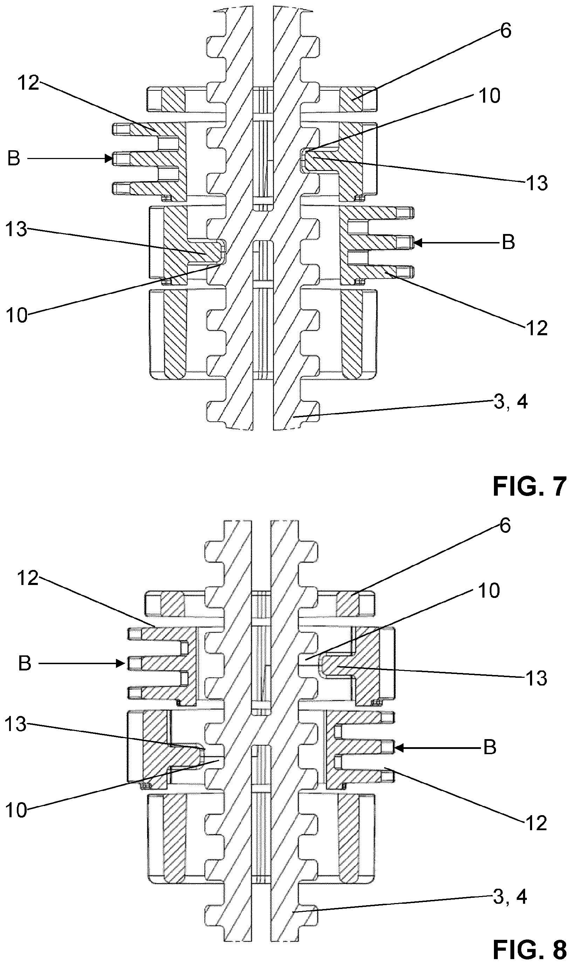

Das Trägerelement 6 weist pro Stütze 3, 4 einen Befestigungsabschnitt 11 auf. Der Befestigungsabschnitt 11 weist mindestens eine Federlasche 12 mit einem Rastabschnitt 13 für den Eingriff in eine der genannten Rastöffnungen 10 auf. Der Eingriff des Rastabschnitts 13 in die Rastöffnung 10 wird in der Figur 7 gezeigt. Wenn der Rastabschnitt 13 in die Rastöffnung 10 eingreift, dann ist das Trägerelement 6 zur jeweiligen Stütze 3, 4 festgelegt. In der Figur 8 wird gezeigt, dass der Rastabschnitt 13 nicht im Eingriff mit der Rastöffnung 10 ist. Wenn der Rastabschnitt 13 nicht in die Rastöffnung 10 eingreift, dann ist das Trägerelement 6 zur jeweiligen Stütze 3, 4 bewegbar und die Höhe des Trägerelements 6 zum Supportelement 2 kann in Richtung der jeweiligen Stützenachse S3, S4 eingestellt werden.

Die Federlasche 12 ist so ausgebildet ist, dass bei Einwirken einer Betätigungskraft B die Federlasche 12 so bewegbar ist, dass der Rastabschnitt 13 aus der Rastöffnung 10 hinaus bewegbar ist. Die Wirkrichtung der Betätigungskraft B ist in den Figuren 7, 8 eingezeichnet. Bei Einwirkung der Betätigungskraft B ist der Rastabschnitt 13 aus der Rastöffnung 10 hinaus bewegbar, so dass das Trägerelement 6 relativ zu den Stützen 3, 4 verschiebbar ist. Bei Wegfall der Betätigungskraft B ist Federlasche 12 in den Eingriff mit einer der Rastöffnungen 10 bringbar, so dass das Trägerelement 6 relativ zu den Stützen 3, 4 festlegbar ist.

Vorzugsweise weist der Befestigungsabschnitt 11 einen mit einer umlaufenden Seitenwand 24 begrenzten Aufnahmeraum 25 auf. Die Stütze 3, 4 ragen durch den jeweiligen Aufnahmeraum 25 hindurch. Die Stützen 3, 4 sind relativ zum Aufnahmeraum verschiebbar.

Vorzugsweise weist die Seitenwand 24 eine Ausnehmung 26 für die Federlasche 12 auf.

Dies wird in der Figur 1 gezeigt. Die Federlasche 12 ist an einer Befestigungsstelle 27 an der Seitenwand 24 angeformt. Die Federlasche 12 erstreckt sich von der Befestigungsstelle 27 in der Ausnehmung 26 bis zu einer der genannten Seitenwand 24 gegenüberliegenden Seitenwand 28 erstreckt. Bei der gegenüberliegenden Seitenwand 28 endet die Federlasche 12 mit einem freien Ende 29. Der Rastabschnitt 13 ragt von der Seitenwand 24 gegenüber dem freien Ende 29 in den Aufnahmeraum 25 ein. Bei einer Betätigung wird die Federlasche 12 beim freien Ende 19 betätigt und das freie Ende 19 wird in Richtung des Aufnahmeraums 25 bewegt. Gleichzeitig wird der Rastabschnitt aus dem Aufnahmeraum 25 und aus der Rastöffnung 10, wie oben beschrieben, hinaus bewegt.

In der gezeigten Ausführungsform sind zwei Federlaschen 12 angeordnet und es sind zwei Betätigungsnocken 30 bezüglich des Aufnahmeraums 25 gegenüber einander angeordnet. Somit kann ein Installateur einhändig beide Federlaschen 12 betätigen.

Vorzugsweise weist die Stütze 3, 4 auf zwei einander gegenüberliegenden Seiten die genannten Rastöffnungen 10 aufweist.

Vorzugsweise weist die Federlasche 12 mindestens eine von der Aussenseite der Federlasche 12 abragende Betätigungsnocke 30 auf. Hier sind drei Betätigungsnocken 30 angeordnet.

Ein Verfahren zur Montage einer Rohrhalterung nach obiger Beschreibung ist dadurch charakterisiert,
dass in einem ersten Schritt das Supportelement auf einer Montageebene platziert wird,
dass in einem zweiten Schritt die Stützen in die Lageröffnung eingesetzt werden,
dass in einem dritten Schritt das Trägerelement mit den Stützen verbunden wird, und
dass in einem vierten Schritt ein Rohr auf die Trägerfläche aufgelegt wird.

### BEZUGSZEICHENLISTE

- 1: Rohrhalterung
- 2: Supportelement
- 3: Stütze
- 4: Stütze
- 5: Zwischenraum
- 6: Trägerelement
- 7: Trägerfläche
- 8: Lageröffnung
- 9: Lageröffnung
- 10: Rastöffnungen
- 11: Befestigungsabschnitt
- 12: Federlasche
- 13: Rastabschnitt
- 14: Auflagefläche
- 15: Frontfläche
- 16: Klemmlasche
- 17: Rastnocke
- 18: Rastausnehmung
- 19: Anschlagsfläche
- 20: Seitenwände
- 21: Stirnfläche
- 22: Führungselemente
- 23: Wandung
- 24: Seitenwand von 11
- 25: Aufnahmeraum
- 26: Ausnehmung
- 27: Befestigungsstelle
- 28: gegenüberliegende Seitenwand
- 29: freies Ende
- 30: Betätigungsnocke
- 31: Befestigungsöffnung
- 32: Anformstelle
- 33: freies Ende
- 34: Kabelbinder
- B: Betätigungskraft
- S3: Stützenachse
- S4: Stützenachse

## Patentansprüche

1. Rohrhalterung (1) zur Festlegung eines Rohrs, umfassend
ein Supportelement (2) zur Lagerung der Rohrhalterung (1) auf einer Montageebene;
zwei mit dem Supportelement (2) verbindbare Stützen (3, 4), die in einem Abstand zueinander stehen, so dass zwischen den beiden Stützen ein Zwischenraum (5) für das Rohr geschaffen wird und
mindestens ein an den beiden Stützen (2) höhenverstellbar gelagertes Trägerelement (6) mit einer Trägerfläche (7), auf welcher ein Rohr lagerbar ist,
wobei die Stützen (3, 4) stabförmig ausgebildet sind und sich in Richtung einer Stützenachse (S3, S4) erstrecken,
wobei das Supportelement (2) zwei beabstandet zueinander liegende Lageröffnungen (8, 9) zur Lagerung der Stützen (3, 4) am Supportelement (2) aufweist,
**dadurch gekennzeichnet, dass** die Lageröffnungen (8, 9) derart angeordnet und ausgebildet sind, dass die Stützen (3, 4) über eine Bewegung in Richtung der jeweiligen Stützenachse (S3, S4) in die Lageröffnungen (8, 9) einsetzbar sind.

2. Rohrhalterung (1) zur Festlegung eines Rohrs, umfassend
ein Supportelement (2) zur Befestigung auf einer Montageebene;
zwei mit dem Supportelement (2) verbindbare Stützen (3, 4) oder zwei am Supportelement (2) angeformte Stützen (3, 4), welche Stützen (3, 4) in einem Abstand zueinander stehen, so dass zwischen den beiden Stützen ein Zwischenraum (5) für das Rohr geschaffen wird und
mindestens ein an den beiden Stützen (2) höhenverstellbar gelagertes Trägerelement (6) mit einer Trägerfläche (7), auf welcher ein Rohr lagerbar ist,
wobei die Stützen (3, 4) stabförmig ausgebildet sind und sich in Richtung einer Stützenachse (S3, S4) erstrecken,
wobei die Stützen (3, 4) jeweils eine Vielzahl von in Richtung der jeweiligen Stützenachse (S3, S4) verteilt angeordnete Rastöffnungen (10) aufweisen,
**dadurch gekennzeichnet, dass** das Trägerelement (6) pro Stütze (3, 4) einen Befestigungsabschnitt (11) aufweist, wobei der Befestigungsabschnitt (11) mindestens eine Federlasche (12) mit einem Rastabschnitt (13) für den Eingriff in eine der genannten Rastöffnungen (10) aufweist,
wobei die Federlasche (12) so ausgebildet ist, dass bei Einwirken einer Betätigungskraft (B) die Federlasche (12) so bewegbar ist, dass der Rastabschnitt (13) aus der Rastöffnung (10) hinaus bewegbar ist, so dass das Trägerelement (6) relativ zu den Stützen (3, 4) verschiebbar ist und wobei die Federlasche (12) bei Wegfall der Betätigungskraft (B) in den Eingriff mit einer der Rastöffnungen (10) bringbar ist, so dass das Trägerelement (6) relativ zu den Stützen (3, 4) festlegbar ist.

3. Rohrhalterung (1) nach Anspruch 2, **dadurch gekennzeichnet, dass** das Supportelement (2) zwei beabstandet zueinander liegende Lageröffnungen (8, 9) zur Lagerung der Stützen (3, 4) am Supportelement (2) aufweist, wobei die Lageröffnungen (8, 9) derart angeordnet und ausgebildet sind, dass die Stützen (3, 4) über eine Bewegung in Richtung der jeweiligen Stützenachse (S3, S4) in die Lageröffnungen (8, 9) einsetzbar sind.

4. Rohrhalterung (1) nach Anspruch 1 oder nach Anspruch 3, **dadurch gekennzeichnet, dass** die Bewegung eine Längsbewegung in Richtung der Stützenachse (S3, S4) ist; und/oder dass die Bewegung in Einbaulage rechtwinklig zur Montageebene verläuft.

5. Rohrhalterung (1) nach Anspruch 1 oder nach einem der Ansprüche 3 bis 4, **dadurch gekennzeichnet, dass** das Supportelement (2) eine Auflagefläche (14), auf welcher das Supportelement (2) auf der Montageebene lagerbar ist, und eine Frontfläche (15), die gegenüber der Auflagefläche (14) liegt, aufweist, wobei sich die Lageröffnungen (8, 9) von der Frontfläche (15) in das Supportelement (2) hinein erstrecken.

6. Rohrhalterung (1) nach Anspruch 1 oder einem der vorhergehenden Ansprüche 3 bis 5, **dadurch gekennzeichnet,**
**dass** die Lageröffnungen (8, 9) jeweils mindestens eine Klemmlasche (16) aufweist, mit welcher die jeweilige Stütze (3, 4) in der jeweiligen Lageröffnung (8, 9) festlegbar ist;
wobei die Klemmlasche (16) vorzugsweise eine Rastnocke (17) aufweist und dass die Stütze eine zur Rastnocke (17) korrespondierende Rastausnehmung (18) aufweist, in welche die Rastnocke (17) eingreift; oder
**dass** die Stützen (3, 4) jeweils mindestens eine Klemmlasche (16) aufweist, mit welcher die jeweilige Stütze (3, 4) in der jeweiligen Lageröffnung (8, 9) festlegbar ist;
wobei die Klemmlasche (16) vorzugsweise eine Rastnocke (17) aufweist und dass die Stütze eine zur Rastnocke (17) korrespondierende Rastausnehmung (18) aufweist, in welche die Rastnocke (17) eingreift.

7. Rohrhalterung (1) nach Anspruch 1 oder einem der vorhergehenden Ansprüche 3 bis 6, **dadurch gekennzeichnet,**
**dass** die Lageröffnungen (8, 9) jeweils eine Anschlagsfläche (19) aufweisen, auf welcher die jeweilige Stütze (3, 4) bezüglich einer Krafteinwirkung in Richtung der Stützenachse (S3, S4) abgestützt ist; und/oder
**dass** die Lageröffnungen (8, 9) Seitenwände (20) aufweisen, welche die jeweilige Stütze (3, 4) bezüglich einer Richtung quer zur Stützenachse (S3, S4) in dem Bereich der Stütze (3, 4), der in die Lageröffnung (8, 9) einragt, mindestens teilweise seitlich umgeben.

8. Rohrhalterung nach Anspruch 1 oder einem der vorhergehenden Ansprüche 3 bis 7, **dadurch gekennzeichnet, dass** die Lageröffnungen (8, 9) Führungselemente (22) aufweist, welche eine Führung für die Stütze (3, 4) quer zur Stützenachse (S3, S4) bereitstellt, wobei die Führungselemente (22) vorzugsweise Führungsrippen sind, welche von Seitenwänden (20) der jeweiligen Lageröffnung (8, 9) in die jeweilige Lageröffnung (8, 9) einragen.

9. Rohrhalterung (1) nach einem der vorhergehenden Ansprüche 2 bis 8, **dadurch gekennzeichnet, dass** pro Befestigungsabschnitt (11) zwei Federlaschen (12) mit je mindestens einem Rastabschnitt (13) vorhanden sind, wobei die Federlaschen (12) derart angeordnet sind, dass bei einer Bewegung der Federlaschen (12) aufeinander zu, die Rastabschnitte (13) aus den Rastöffnungen (10) hinaus bewegbar sind.

10. Rohrhalterung (1) nach einem der vorhergehenden Ansprüche 2 bis 9, **dadurch gekennzeichnet, dass** der Befestigungsabschnitt (11) einen mit einer umlaufenden Seitenwand (24) begrenzten Aufnahmeraum (25) aufweist, durch welchen die Stütze (3, 4) hindurchragt und in welchem die Stütze (3, 4) in Richtung der Stützenachse (S3, S4) bewegbar ist.

11. Rohrhalterung (1) nach Anspruch 10, **dadurch gekennzeichnet, dass** die Seitenwand (24) eine Ausnehmung (26) für die Federlasche (12) aufweist, wobei die Federlasche (12) an einer Befestigungsstelle (27) an der Seitenwand (24) angeformt ist und sich von der Befestigungsstelle (27) in der Ausnehmung (26) bis zu einer der genannten Seitenwand (24) gegenüberliegenden Seitenwand (28) erstreckt und dort mit einem freien Ende (29) endet, wobei der Rastabschnitt (13) von der Seitenwand (24) gegenüber dem freien Ende (29) in den Aufnahmeraum (25) einragt.

12. Rohrhalterung (1) nach einem der vorhergehenden Ansprüche 2 bis 11, **dadurch gekennzeichnet, dass** die Stütze (3, 4) auf zwei einander gegenüberliegenden Seiten die genannten Rastöffnungen (10) aufweist; und/oder dass die Federlasche (12) mindestens eine von der Aussenseite der Federlasche (12) abragende Betätigungsnocke (30) aufweist.

13. Anordnung umfassend mindestens eine Rohrhalterung (1) nach einem der vorhergehenden Ansprüche, eine Montageebene und ein Rohr, wobei die Rohrhalterung (1) durch das Supportelement (2) zur Montagebene befestigt ist, wobei die Stützenachsen (S3, S4) rechtwinklig zur Montageebene orientiert sind.

14. Verfahren zur Montage einer Rohrhalterung (1) nach einem der vorhergehenden Ansprüche, **dadurch gekennzeichnet,**
**dass** in einem ersten Schritt das Supportelement auf einer Montageebene platziert wird,
**dass** in einem zweiten Schritt die Stützen in die Lageröffnung eingesetzt werden,
**dass** in einem dritten Schritt das Trägerelement mit den Stützen verbunden wird, und
**dass** in einem vierten Schritt ein Rohr auf die Trägerfläche aufgelegt wird.
